# EUROPEAN PATENT APPLICATION

(11) **EP 3 975 367 A1**
(43) Date of publication of application: **30.03.2022**
(21) Application number: 20382858.7
(22) Date of filing: 29.09.2020
(51) Int. Cl.: H02J 3/18, H02J 3/38

(54) **ELECTRICAL POWER SYSTEM OF A WIND TURBINE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: Aspacher, Karl-Georg

(57) **Abstract**

An electrical power system of a wind turbine is provided. A power converter (20) of the wind turbine is configured to convert electrical power generated by an electrical generator (11) of the wind turbine and to provide the converted electrical power to a power grid (100). The electrical power system (10) comprises an inductor unit (30) coupled between a grid side converter section (21) of the power converter (20) and the power grid (100). Electrical power provided by the power converter (20) towards the power grid (100) causes a voltage drop across the inductor unit (30). The power system (10) further comprises an inductance adjustment unit (40) coupled to the inductor unit (30). The inductance adjustment unit (40) is configured to adjust an inductance value of the inductor unit (30) to thereby adjust the voltage drop across the inductor unit (30).

## Description

### FIELD OF THE INVENTION

The present invention relates to an electrical power system of a wind turbine that includes an inductor unit coupled between a grid side converter section of a wind turbine power converter and a power grid. It further relates to a method of controlling the operation of an electrical power system of a wind turbine.

### BACKGROUND

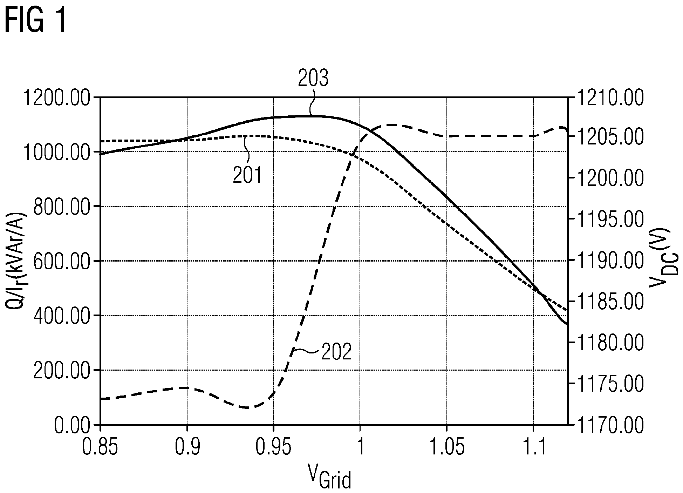

Wind turbines generally comprise a rotor with rotor blades which convert wind energy into rotational mechanical energy and a generator that converts the mechanical energy into electrical energy. Variable speed wind turbines are equipped with a converter which, in a full converter solution, converts substantially all of the electrical power generated by the generator, or in a solution employing a doubly fed induction generator (DFIG) is coupled to a rotor of the DFIG to control the frequency of the generated electrical power. Such converter generally comprises a generator side converter section and a grid side converter section that are coupled by a DC link. When operating at high voltage levels, the voltage on the DC link can reach an operating limit or may even exceed the operating limit. Such conditions may for example occur when the grid voltage increases. Consequently, to continue operation, the maximum current that the power converter can provide needs to be reduced in order to keep the voltage on the DC link within operating range, and the limitations to voltage and current result in a reduction of the maximum reactive power capability. An example of such situation is illustrated in Fig. 1. The abscissa of the diagram illustrates the grid voltage V_{Grid} in terms of deviation from the nominal operating voltage (V_{Grid} = 1pu), wherein curve 201 shows the grid side converter current Iᵣ and curve 202 illustrates the DC link voltage V_{DC} on the DC link of the power converter. As can be seen, if the grid voltage exceeds the nominal voltage, the voltage on the DC link reaches an upper limit (in the present example about 1200 V), and the converter current Iᵣ needs to be reduced. Curve 203 shows the maximum reactive power capability Q of the power converter, which likewise decreases significantly as the grid voltage increases. Providing more reactive power would require higher voltages on the DC link, which is not possible as the maximum DC link voltage has already been reached.

On the other hand, the electrical power system of a wind turbine needs to fulfill the grid code requirements which are becoming more and more stringent. For example, the power system needs to filter out harmonic distortions, for which purpose harmonic filters are provided in the power system. Such filters include for example inductances, which may have a higher value in order to provide the required filtering.

It is accordingly difficult to meet all requirements laid out by the grid code with respect to the reactive power providing capabilities and the filtering capabilities. Both in full converter (FC) topologies and DFIG electrical systems, the voltage range limit for the DC link is reached relatively quickly if grid voltage rises, resulting in the respective reactive power limitation. This is of particular importance in wind farms with over-excited set points, in which case the voltage level of the wind farm increases and every wind turbine needs to operate at high voltage at maximum reactive power capability.

Conventional systems therefore comprise constraints to limit the generated reactive power. Also, conventional systems may not fulfill all requirements, such as demanding over-voltage ride-through requirements. Furthermore, if the voltage on the DC link exceeds the limit, the power controller may be controlled to operate according to an over-modulating strategy, in which it operates with high levels of harmonic emission. A further possibility to address the above problems is the over-sizing of the power converter, which results in higher costs and less efficient operation.

### SUMMARY

Accordingly, there is a need to mitigate at least some of the drawbacks mentioned above and to provide an electrical power system for a wind turbine that also provides sufficient reactive power capability at higher grid voltages, while being able to efficiently filter out harmonic distortions during normal operation.

This need is met by the features of the independent claims. The dependent claims describe embodiments of the invention.

According to an aspect of the invention, an electrical power system of a wind turbine is provided, wherein a power converter of the wind turbine is configured to convert electrical power generated by an electrical generator of the wind turbine and to provide the converted electrical power to a power grid. The electrical power system comprises an inductor unit coupled between a grid side converter section of the power converter and the power grid. Electrical power provided by the power converter towards the power grid may cause a voltage drop across the inductor unit in operation of the power system. The electrical power system further comprises an inductance adjustment unit coupled to the inductor unit and configured to adjust an induction value of the inductor unit. Thereby, the voltage drop across the inductor unit is adjusted.

By such electrical power system, the reactive power capability that can be provided to the grid by the wind turbine can be improved. In particular, as the voltage on the power grid rises, the inductance value can be reduced by the inductance adjustment unit, thus resulting in a reduced voltage drop across the inductor unit. Accordingly, the voltage that needs to be provided by the power converter towards the grid (AC output) can be reduced, thus allowing the power converter to provide more reactive power. The voltage range of the grid voltage over which the power converter can operate is thereby also increased. Also, the electrical performance during grid events can be improved, for example during transient events, or events related to voltage stability, and in particular over-voltage ride-through. If a respective over-voltage occurs on the power grid, the inductance value can be reduced by means of the inductance adjustment unit, thereby reducing the voltage that needs to be provided by the power converter during the over-voltage event. The inductance adjustment unit is in particular configured to provide an on-load adjustment of the inductance value, in particular during operation of the wind turbine when converted electrical power flows through the inductor unit.

The inductor unit may comprise or consist of a single inductor, yet it may also comprise or consist of two, three or more distinct inductors that are connected in series and/or in parallel. The inductor unit is in particular series-connected in the electrical coupling from the power converter to the power grid, which may comprise further components, such as a transformer or the like. The power grid may be a local wind farm grid, or may be a utility grid. Substantially all of the power output by the power converter may pass through the inductor unit, in particular through one or more series-connected inductors of the inductor unit. The inductor unit may for example have an input terminal coupled or connected, in particular directly connected, to the AC output of the grid side converter section and an output terminal that is coupled to the power grid, for example via a transformer. It should be clear that the system may be a three phase electrical power system and a respective inductor unit and inductance adjustment unit may be provided for each phase.

In an embodiment, the electrical power system comprises a filter that is configured to filter electrical power converted by the power converter and provided towards the power grid. The inductor unit forms part of the filter. As an example, the filter can be a harmonic filter that is configured to attenuate harmonic distortions in the electrical power converted by the power converter.

The inductor unit is in particular distinct from such transformer, and it is in particular unrelated to power transformation provided by such transformer.

The inductance adjustment unit may comprise one or more switches (e.g. valves) coupled to the inductor unit and configured to be switchable to electrically bypass part of the inductor unit to change the inductance value of the inductor unit. These switches may in particular be controllable switches that are switched by a respective control signal. Bypassing part of the inductor unit means that the power provided by the power converter towards the power grid does not flow through the bypassed part of the inductor unit. For example, part of an inductor or a whole inductor may be bypassed. The inductance value of the inductor unit can thus be controlled easily to thereby change the voltage drop across the inductor unit.

The inductance adjustment unit may in particular comprise one or more taps coupled to at least one inductor of the inductor unit. A switch of the one or more switches may be electrically connected to a respective tap such that by closing the switch, a part of the inductor is electrically bypassed. Plural taps may be provided for the inductor, and each tap may include and be connected to an associated switch. The associated switch is in particular connected such that when the switch is closed, the respective tap is connected to either the electrical connection towards the input terminal or to the electrical connection towards the output terminal of the respective inductor, thereby electrically bypassing the part of the inductor between the tap and the respective terminal.

The switches are preferably on-load switches. The inductance adjustment unit may in particular implement an on-load tap changer for the inductor of the inductor unit.

The inductor is for example a coil, and plural taps are connected to different windings on the coil to bypass respective windings of the coil. The inductor can be an electromagnetic wound coil that has an air core or a magnetic core.

Other possibilities of adjusting the inductance value of the inductor are also conceivable. For example, some solutions may employ sliding contacts instead of taps, the inductor core may be varied (for example moved in and out) to adjust the inductance value, or the inductor may include two coils the relative orientation of which is adjusted to change the inductance value, such as in a variometer.

Preferably, the one or more switches comprise a further switch that is connected in series with the inductor. The further switch may be operable to electrically disconnect one end of the inductor part that is being bypassed from the circuit. The further switch is connected to the respective end of the bypassed inductor part, while the other end of the bypassed inductor part is connected to the tap, the associated switch of which is closed to bypass said inductor part. The further switch is in particular connected to the input terminal or the output terminal of the inductor, depending on which part of the inductor is being bypassed. Accordingly, after closing the switch associated with the tap (i.e. completing a tap change), the further switch can be opened so the part of the inductor that is bypassed is no longer shortcircuited. Thereby, it can be prevented that currents that are still induced in this bypassed part of the inductor, in particular coil, dissipate energy and result in high short circuit currents through the bypassed part.

In an embodiment, the inductor unit comprises at least two distinct inductors, in particular coils, connected in series between the grid side converter section of the power converter and the power grid. A switch of the one or more switches is connected to a point between the two inductors such that by closing the switch, one or more of the at least two inductors is electrically bypassed. Preferably, at least one inductor is kept in the circuit, although it is also conceivable that the whole inductor unit is being bypassed. Accordingly, the power provided by the power converter towards the power grid does not flow through the bypassed inductor(s) of the inductor unit. Thereby, the inductance value of the inductor unit can be adjusted efficiently. In particular, such bypassing may be performed by only a single switch, since if the whole inductor is bypassed, no respective short circuit currents are induced in the bypassed inductor. System complexity can thereby be reduced. It should be clear that plural inductors, such as two, three, four, five or more distinct inductors can be provided in the inductor unit and the inductance adjustment unit may comprise at least one switch for each inductor to bypass the respective inductor, or to bypass the inductor and any downstream inductors (downstream referring to the direction of power flow during normal operation) or upstream inductors. If one inductor is not to be bypassed, no switch needs to be provided for such inductor.

It should further be clear that also in embodiments in which the inductor unit comprises two or more inductors, respective taps may be provided on one, two, more or on all of the inductors. A fine adjustment of the inductance value over a wide range thus becomes possible.

The one or more switches may comprise a power electronic switch and/or comprise an electromechanical switch, in particular each of these switches. Preferably, all switches are of the same type, yet it is also conceivable to provide some switches as electromechnical switches and other switches as power electronic switches. The switches are preferably on-load switches. A power electronic switch may for example comprise two semiconductor switches that are connected anti-parallel. An example is anti-parallel connected thyristors. Another example for a power electronic switch is anti-series connected semiconductor switches, e.g. IGBTs with freewheel diodes. Such switch may also be termed switching valve. As an example for an electromechanical switch, vacuum circuit breakers, relays, or other types of electromechanical switches that provide a mechanical switching of the current based on an electrical control signal may be employed.

The inductor unit may for example be connected between the grid side converter section and a transformer of the wind turbine. It is also possible that the inductor unit is connected between an output of the wind turbine and a transformer of a wind farm, such as a sub-station transformer.

The inductor unit may form part of a filter comprised in the power converter (i.e. it may be internal to the power converter). In other implementations, the filter including the inductor unit is separate and physically distinct from the power converter. The power converter may further comprise a generator side converter section configured to be coupled, in particular directly connected, to the generator of the wind turbine and an intermediate DC-link that couples, in particular directly connects, the generator side converter section to the grid side converter section.

It should be clear that the wind turbine may not only comprise a single power converter, but may comprise plural power converters that are for example connected in parallel and that are coupled to the wind turbine generator. A respective inductor unit, in particular harmonic filter, and a respective inductance adjustment unit may be provided for each power converter, or the inductor unit and the inductance adjustment unit may be provided for all of these plural power converters (the AC outputs of all power converters may be connected to the same inductor unit).

Preferably, the electrical power system further comprises a controller configured to receive a monitoring signal that is indicative of at least one of a voltage on a DC link of the power converter, a voltage at a grid side output of the power converter, a voltage on a connection to the power grid (e.g. on a coupling point), or a voltage on the power grid. The controller is configured to control the inductance value of the inductor unit by means of the inductance adjustment unit based on the voltage indicated by the received monitoring signal. The power system may for example include one or more respective sensors to measure the respective voltage, or the voltage may be obtained from another component of the wind turbine, such as from the converter controller or from a wind turbine controller. By making use of such monitoring signal, feedback control and/or feed forward control of the inductance value of the inductor unit can be implemented.

The controller may for example be configured to compare the voltage indicated by the received monitoring signal to a respective voltage threshold, wherein if the voltage exceeds the voltage threshold, the controller controls the inductance adjustment unit so as to reduce the inductance value of the inductor unit. Accordingly, the voltage drop across the inductor unit, which is due to the reactance of the one or more inductors of the inductor unit, is decreased, thereby allowing the power converter to continue operation within its operating range and to increase its reactive power providing capability. The inductance value can be reduced by bypassing windings of an inductor (coil) using respective taps and/or by bypassing a distinct inductor, as indicated above. This voltage threshold may be an upper voltage threshold, and the controller may be configured to likewise increase the inductance value of the inductor unit by means of the inductance adjustment unit if the voltage drops below a lower voltage threshold.

As an example, the controller may be configured to obtain the voltage on the DC link of the power converter or on a grid side output of the power converter and to control the inductance adjustment unit so as to reduce the inductance value of the inductor unit if the voltage on the DC link or the grid side output exceeds a respective threshold voltage to thereby reduce the voltage on the DC link of the power converter. Feedback control can thereby be implemented, according to which each time that such upper voltage threshold is reached, the tap is changed (or an inductor is bypassed), until the last tap is reached or until all bypassable inductors are bypassed (in other words, until the minimum inductance value of the inductor unit is reached).

If the monitoring signal indicates the voltage on the power grid or at a connection towards the power grid, in particular downstream of the inductor unit, e.g. at a grid connection point, multiple subsequent thresholds may be employed and the inductance value may be changed each time such threshold is reached. Each voltage range between two adjacent thresholds may thus correspond to a different switching state of the inductance adjustment unit, resulting in a respective inductance value that keeps the voltage on the DC link of the power converter within operating limits. For example, each time that an upper threshold of such range is reached or exceeded, the inductance value is reduced by a further step. If the voltage drops below a lower threshold of such range, the inductance is again increased. Thresholds may for example be set at 1.01pu, 1.02pu, 1.03pu, ... of the grid voltage (range of 0.01pu between adjacent thresholds). For example, 2-15 thresholds may be set in a range starting at about 0.99pu and 1.01pu and ending at about 1.05pu to 1.15pu.

The controller may be implemented in a converter controller of the power converter. It may also be implemented in a wind turbine controller of the wind turbine. In some embodiments, parts of the controller may be distributed between the wind turbine controller and the converter controller, or the controller may be a separate entity that is distinct from the wind turbine controller and the converter controller.

In some embodiments, the generator may be a doubly fed induction generator, and the power converter may be coupled to a rotor of the doubly fed induction generator. In other embodiments, the power converter may be a power converter of a full converter topology (it may for example convert substantially all of the electrical power generated by the generator). In such full converter topology, the generator may be a synchronous of asynchronous generator, for example a permanent magnet synchronous generator (PMSG). In the DFIG configuration, the converter is configured to convert only a fraction (<50%) of the electrical power generated by the generator.

The electrical power system may comprise the converter. It may further comprise the generator and/or the transformer.

According to a further embodiment, a wind turbine comprising a power converter is provided that is configured to convert electrical power generated by an electrical generator of the wind turbine and to provide the converted electrical power to a power grid. The wind turbine further comprises an electrical power system that has any of the configurations described herein. By means of such wind turbine, the capability to provide reactive power to the power grid during over-voltage conditions and even at nominal grid voltage is improved significantly.

According to a further aspect of the invention, a method of controlling the operation of an electrical power system of a wind turbine is provided. The wind turbine includes a respective power converter, and an inductor unit is coupled between a grid side converter section of the power converter and the power grid. Electrical power provided by the power converter towards the power grid causes a voltage drop across the inductor unit. The method comprises the adjusting, by means of an inductance adjustment unit coupled to the inductor unit, an inductance value of the inductor unit to thereby adjust the voltage drop across the inductor unit. By means of such method, advantages similar to the ones outlined further above may be achieved.

In an embodiment, the method further comprises obtaining at least one of a voltage on a DC link of the power converter, a voltage at a grid side output of the power converter, a voltage on a connection from the inductor unit towards the power grid (e.g. on a coupling point) or a voltage on the power grid. The voltage may for example be obtained by measuring the voltage using a respective sensor or by obtaining the voltage from another component of the wind turbine or the electrical power system. The method further comprises controlling the inductance value of the inductor unit by means of the inductance adjustment unit based on the obtained voltage. As outlined above, feedback and/or feed forward control of the inductance value may thereby be implemented.

The electrical power system may be configured to perform any of the methods described herein. The method may be performed with an electrical power system having any of the configurations described herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The forgoing and other features and advantages of the invention will become further apparent from the following detailed description read in conjunction with the accompanying drawings. In the drawings, like reference numerals refer to like elements.
Fig. 1 is a schematic diagram showing loss of reactive power providing capability of a wind turbine at higher grid voltages.
Fig. 2 is a schematic drawing showing an electrical power system comprising an inductance adjustment unit according to an embodiment of the invention.
Fig. 3 is a schematic drawing showing an electrical power system comprising an inductance adjustment unit according to an embodiment of the invention.
Fig. 4 is a schematic drawing showing an electrical power system comprising an inductance adjustment unit according to an embodiment of the invention.
Fig. 5 is a schematic flow diagram illustrating a method of controlling the inductance value of an inductor unit according to an embodiment of the invention.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted.

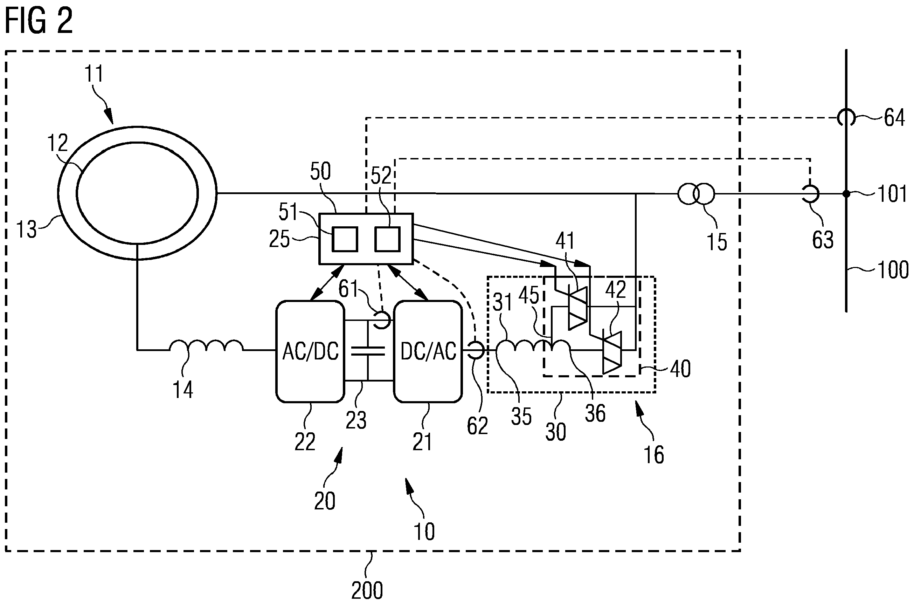

As indicated above, Fig. 1 is a schematic diagram that illustrates how the maximum reactive power capability, the DC link voltage of a power converter and the grid side converter current Iᵣ behave if the grid voltage changes. The inventors of the present invention have found that the DC link voltage reaching its upper limit relatively quickly upon the grid voltage reaching or exceeding nominal voltage values is also caused by the inductor comprised in the filter, in particular harmonic filter, that filters the output of the power converter. Examples of such filter 16 with an inductor unit 30 are for example shown in Figs. 2 to 4. Current grid code requirements may only be met if the inductor has a relatively high inductance value, resulting in a significant voltage drop across the filter inductor, so that the power converter needs to be operated at higher voltages when supplying electric power to the grid. Consequently, the DC link voltage quickly reaches its upper limit if grid voltage increases. For example, a filter inductance of 400µH at 60Hz grid frequency results in a reactance of 151mΩ for the inductor. If the maximum voltage UDCₘₐₓ on the DC link, including a safety margin, is 1175V, then the maximum RMS operating voltage is 830.85V. At a rated grid side current at the power converter output of 400A, the voltage drop across the inductor is 151mΩ x 400A = 60.4V. Consequently, when operating at the upper limit, the power converter can only deliver at maximum 830.85V - 60.4V = 770.45V towards the power grid, corresponding to 1.116Pu at a nominal operating voltage of 690V on the connection towards the transformer (LV side of transformer). It should be clear that the voltage limit will be reached much faster upon the use of higher inductance values. In accordance with embodiments of the invention, the inductance value is now modified and in particular reduced to increase the maximum reactive power providing capability of the power converter and thus of the wind turbine. The inductance value of the inductor of the filter is adapted so that the DC link voltage is reduced and more reactive power can be provided. The electrical stability of the power grid is thereby improved by extending, for a short period of time, the reactive power capabilities. During such time, and in particular during electrical transient events, the grid code requirements may allow that some requirements are not met, and in particular that harmonic emissions may be increased during such short period of time. Reactive power capability is thus increased at the expense of the emission of harmonics, since such harmonic emissions of the wind turbine are increased if the filter inductance value is reduced.

Fig. 2 schematically illustrates a power system 10 that may comprise a harmonic filter 16 that may include the inductor unit 30 comprising or consisting of the inductor 31. The power system 10 may further comprise the inductance adjustment unit 40 that may be configured to change the inductance value of inductor unit 30, so that the inductance value may be set to the most advantageous value for the respective circumstances. For the sake of simplicity, other components of the harmonic filter 16 are not shown.

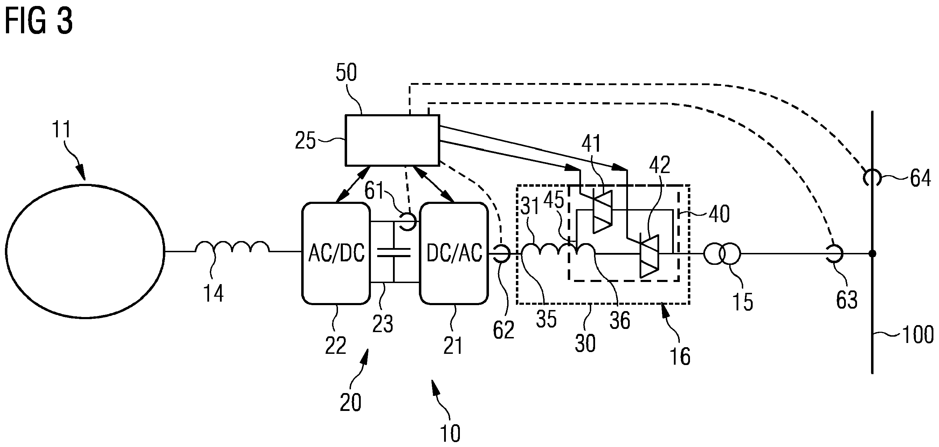

The inductor unit 30 and the inductance adjustment unit 40 may be employed in any power system configuration, such as in the DFIG configuration of Fig. 2 of the full converter topology of Fig. 3. In Fig. 2, a DFIG 11 may include a rotor 12 and a stator 13, wherein the stator may be coupled, via a power transformer 15, to power grid 100, as common for such topologies. A power converter 20 may include a grid side converter section 21, a generator side converter section 22 and an intermediate DC link 23 connecting these sections may be connected to the rotor 12 of DFIG 11. Reference numeral 14 indicates the generator inductance. Inductor unit 30 may be connected in series between the grid side converter section 21 and the power grid 100, it may in particular be connected between the power converter output and the transformer 15. The AC output of the grid side converter section 21 may be in particular connected, for example directly connected, to an input terminal 35 of the inductor 31. An output terminal 36 of the inductor 31 may be coupled to the power grid 101, it may for example be connected to a lower voltage side of the wind turbine transformer 15. Accordingly, converted electrical power provided by power converter 20 to power grid 100 may pass through inductor 31 and may thereby be filtered. Power converter 20 may handle between 20 and 50% of electrical power generated by DFIG 11, for example about 30%.

To change the inductance value of inductor unit 30, one or more taps 45 may be provided on the inductor 31. Accordingly, parts of the inductor 31, in particular windings of the coil that provides the inductor 31, may be taken out of the circuit so that the converted electrical power does not pass through the respective coil windings. Consequently, the voltage drop across the remaining parts of the inductor 31 may be reduced (as the inductance value and thus the reactance is reduced), so that power converter 20 can operate at a lower DC link voltage. Switch 41 may be associated with tap 45 and may be connected such that by closing the switch 41, the respective part of the inductor may be electrically bypassed. A further switch 42 may be connected in series with the inductor 31, in particular between a second terminal (output terminal) 36 and the transformer 15. The further switch 42 may be closed during operation with nominal inductance value (i.e. if the inductance value is not adjusted). Upon connecting tap 45 by closing switch 41, the further switch 42 may be opened to thereby avoid that a short circuit is formed through the bypassed part of the inductor. High-short circuit currents and unnecessary power dissipation may thereby be avoided, since currents will still be induced in the bypassed part of inductor 31, as the magnetic field produced by the active part of inductor 31 may still extend into the bypassed part, thereby causing respective induction. It should be clear that in other configurations, the further switch 42 may be connected to the input terminal 35 of inductor 31, and switch 41 may be connected between tap 45 and the connection to the power converter so that the other part of the inductor 31 may be bypassed.

For example, one to ten, or one to five taps may be provided on inductor 31. The taps 45 may include a tap that completely bypasses the inductor 31, but preferably, the tap at which the lowest inductance value is achieved may still correspond to a certain percentage of the maximum inductance value, such as 10% or more. Voltage drop across inductor 31 may depend on the inductance value (without adjustment) and the nominal operating voltage and frequency on the power grid. The taps may for examples be chosen such that between 5% and 10% of voltage variation of the power grid voltage from the nominal grid voltage may be compensated by changing the inductance value using inductance adjustment unit 40. As example, five taps may be provided, each tap switching about 2% of the nominal grid voltage. Accordingly, if the grid voltage rises by 2%, a tap may be switched, thereby returning the voltage at the output of power converter 20 to the nominal operating value.

The switching may be accordingly performed such that voltage changes of the power grid voltage may be compensated by complementary changes of the voltage drop across the inductor unit 30.

The one or more switches 41, 42 of inductance adjustment unit 40 may be power electronic switches or electromechanical switches. In the example of Fig. 2, each switch may be implemented as a switching valve comprising of two anti-parallel connected thyristors. Other power electronic devices, such as IGBTs or the like may also be used for switching. When implemented as electromechanical switch, vacuum circuit breakers, switching relays or the like may be used. Preferably, the switches may be on load switches and may be configured to provide switching with a response time of less than 10 seconds. The advantage of power electronic switches is that the switching times may be in the millisecond range. Preferably, the switching time may be less than 1 second, preferably less than 100 ms, e.g. about 5-50 ms (a typical switching time would be 10 ms). Mechanical switches may further suffer from a limited number of possible switching cycles.

The electrical power system 10 may further comprise a controller 50 configured to control the inductance adjustment unit 40. It may also comprise a converter controller 25, wherein in the example of Fig. 2, controller 50 may be implemented as part of converter controller 25. Other solutions are also conceivable, in which controller 50 may for example be implemented in a wind turbine controller, may be a separate stand alone controller or may be distributed among plural controllers. The controller 50 may control the one or more switches 41, 42 to adjust the inductance value of inductor unit 30. For this purpose, it may obtain a monitoring signal that may indicate a voltage value which may have an impact on the operating voltage of power converter 20. For example, using a voltage sensor 61, the DC link voltage may be measured and provided as a monitoring signal to controller 50. Using sensor 62, a voltage at the AC output of the grid side converter section 21 may be measured and provided as monitoring signal. Sensor 63 may measure a voltage between the inductor unit 30 and a coupling point 101 to the power grid 100, e.g. between inductor unit 30 and transformer 15, between transformer 15 and coupling point 101 or at coupling point 101. The respective voltage measurement may be indicative of the grid voltage and may be supplied as monitoring signal to controller 50. Further, grid voltage may also directly be measured using sensor 64 and provided as a monitoring signal to controller 50. Based on the received monitoring signal(s), the controller 50 may control the inductance adjustment unit 40. It should be clear that one of the monitored voltage signals may be sufficient to provide the respective control, although a combination of signals may be used. Furthermore, it should be clear that the power system 10 may not need to comprise sensors 61 to 64, but that the respective information may be obtained by communication with a respective information source, such as obtaining grid voltage values from a grid operator, obtaining power converter DC link voltage or AC output voltage from a converter controller or the like.

Controller 50 may provide feed-forward control, for example by basing the control on a voltage signal that may not be directly influenced by the setting of inductance adjustment unit 40, for example by making use of measurements from sensors 63 or 64. Controller 50 may include a number of respective voltage thresholds that may correspond to the different available taps 45 of inductance adjustment unit 40. If the voltage value reaches or exceeds a first threshold, the first tap may be switched, thus decreasing the inductance value by one step. If the voltage increases further and reaches a second threshold, a respective second tap may be switched, thus reducing the inductance value by a further step. The voltage difference between these thresholds may in particular correspond to the change in voltage drop across the inductor 31 caused by switching the respective taps, so that the voltage increase of the grid voltage may be compensated.

Additionally or alternatively, controller 50 may implement feedback control by basing the control on a monitored voltage that may be influenced by the change of the inductance value, for example by making use of voltage values measured by sensors 61 or 62. For example, a single upper threshold above a nominal operating voltage value may be employed, and if the monitored voltage exceeds or reaches such upper threshold, the controller may cause inductance adjustment unit 40 to reduce the inductance value. Consequently, the voltage monitored by sensor 61 or 62 may drop towards the nominal operating voltage due to the reduced voltage drop across inductor 31. If grid voltage further increases, the monitored voltage will again reach the upper threshold, upon which the controller may cause switching to a next tap, thus again reducing the voltage monitored by sensors 61, 62. This may be performed until the last tap is reached. The threshold may be selected such that the monitored voltage does not reach or exceed a respective maximum operating voltage.

A respective lower threshold may be defined so that upon the monitored voltage dropping below the lower threshold, controller 50 may cause adjustment unit 40 to increase the inductance value again. Thereby, the system may return to normal operation upon the grid voltage returning to its nominal value.

Likewise, in case of the feed-forward control, if the voltage monitored by sensors 63 or 64 drops again below the defined thresholds, the controller 50 may cause adjustment unit 40 to again increase the inductance value by switching to the next tap until the whole inductor 31 again forms part of the circuit.

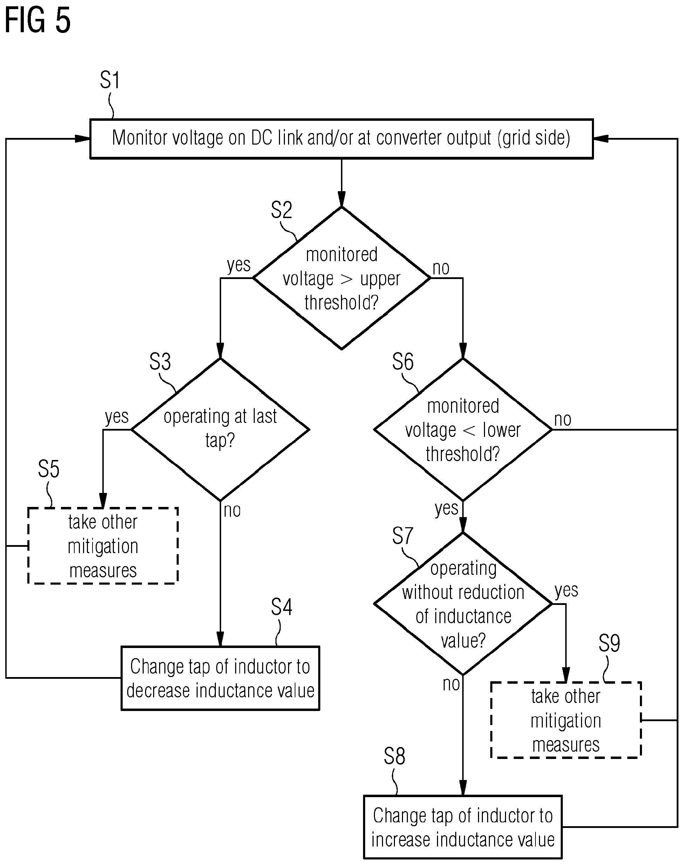

A respective example for feedback control (e.g. using sensor 61 or 62) is illustrated in Fig. 5. In step S1, the voltage on the DC link and/or at the grid side converter output may be monitored by controller 50. In step S2, it may be checked if the monitored voltage exceeds the upper threshold. If this is the case, then it may be checked in step S3 if the inductance adjustment unit 40 is already operating at the last tap. If not, then the tap of the inductor 31 may be changed so as to decrease the inductance value (step S4). Monitoring of the respective voltage may then continue in step S1. If the last tap has already been reached in step S3, then other mitigation measures may be taken in the optional step S5. As an example, the maximum output current of the power converter may be reduced in order to prevent damage to the converter, thereby limiting the reactive power capability. Also, the converter may be operated according to an over-modulating strategy according to which the converter can be driven to higher output voltage levels. Also, to avoid damage to the converter, the converter may be disconnected.

If the monitored voltage does not exceed the upper threshold in step S2, it may be checked in step S6 if it has dropped below a lower threshold. If this is not the case, then the monitored voltage is within range and operation may continue in step S1. If the voltage has dropped below the lower threshold, it may be checked in step S7 if the inductance adjustment unit 40 is already operating without any reduction of the inductance value (i.e. at "tap zero"). If this is not the case, then the inductor tap may be changed in step S8 to increase the inductance value. Operation may then continue in step S1. If it is determined in steps S7 that the inductor unit 40 is already operating without any reduction of the inductance value, then other mitigation measures may be taken in the optional step S9. Such mitigation measures may for example include under-voltage ride-through measures or the like. Operation may then continue in step S1. It should be clear that the example of Fig. 5 only illustrates the control of the inductance adjustment unit 40 by controller 50, and does not include further operating steps performed by the electrical power system 10, such as the converter control.

It should also be clear that the method may likewise be performed in a feed-forward mode in which plural thresholds are employed for switching the taps based on voltages measured by sensors 63, 64, as outlined above.

By such power system and such method, the power converter 20 may, at higher grid voltages, accordingly be operated below the maximum allowable DC link voltage. In other words, when looking at the diagram of Fig. 1, the curve 202 may reach the maximum voltage value of 1200V only at higher voltages of the grid voltage V_{Grid}, for example only at 1.05 or 1.1pu, depending on the inductor size and the minimum inductance value that is retained in the circuit. The grid side converter current Iᵣ indicated by curve 201 may thereby be maintained at higher values and the power converter may provide an improved reactive power capability 203, i.e. more reactive power can be provided at higher grid voltages. The grid voltage range over which the wind turbine can operate efficiently can thereby be increased and in particular, the reactive power providing capabilities are improved. Also, the electrical performance during grid transient events may be improved, such as voltage stability, over-voltage ride-through and the like. Furthermore, a significant performance increase may be achieved while the costs of implementing the power system 10 may be only moderate.

The electrical power system 10 may comprise the controller 50, the inductor unit 30 and the inductance adjustment unit 40. It may further comprise the power converter 20. Further, it may comprise the generator 11 and/or the transformer 15. The electrical power system 10 may be comprised in a wind turbine 200. A rotor (not shown) of the wind turbine may be rotationally coupled to the generator 11 to transfer rotational mechanical energy. Power grid 100 may be a wind farm grid, yet it may also be a utility power grid. As such, it should be clear that further intervening components may be provided between power grid 100 and transformer 15, such as further transformer, further power converters, a sub-station and the like. Power system 10 may comprise further components such as circuit breakers and the like that are common to wind turbine power systems.

Controller 50 may comprise a processor 51, in particular a microprocessor, an ASIC, a DSP or the like and may further comprise a memory 52, such as RAM, ROM Flash-Memory, a hard-disk drive or the like. The memory may comprise control instructions which when executed by the processor of controller 50 perform any of the control methods described herein.

Fig. 3 illustrates an embodiment that is a modification of the embodiment of Fig. 2, so only differences will be described. In the embodiment of Fig. 3, the power system 10 may be implemented in a wind turbine that may comprise a full converter solution. Generator 11 may for example be a permanent magnet synchronous generator (PMSG), or an asynchronous generator. All power generated by generator 11 may substantially pass through the power converter 20. Again, the inductor unit 30 may be series-connected between the power converter 20 and the power grid 100, so that the generated and converted electrical power may pass through the inductor unit 30. The configuration of the inductance adjustment unit 40 and the controller 50 may be similar to the one described above with respect to Figs. 2 and 5.

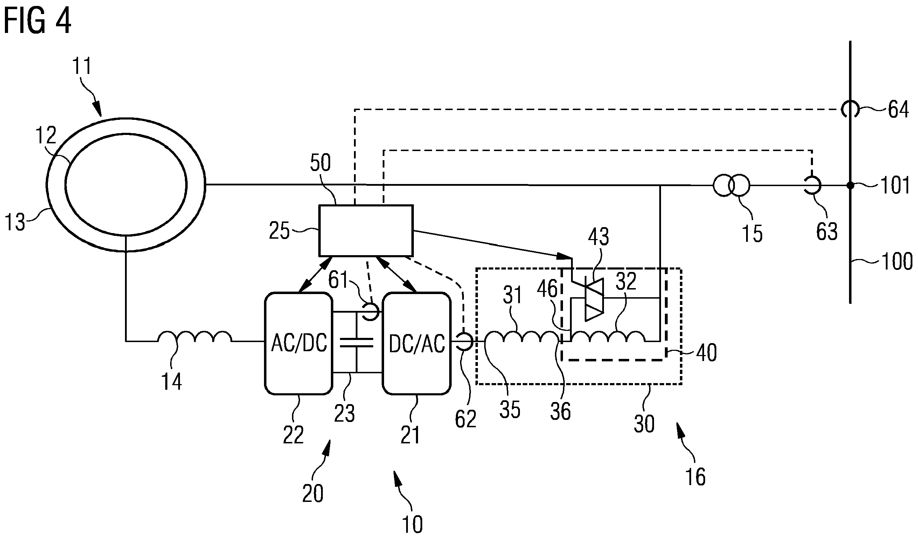

Fig. 4 illustrates a modification of the inductor unit 30 and the inductance adjustment unit 40 that may be implemented in the power topologies of Figs. 2 and 3 and that may be implemented additionally or alternatively to the taps used in these embodiments. In the embodiment of Fig. 4, the inductor unit 30 may comprise two or more distinct inductors 31, 32. A switch 43 may be connected via connection 46 to the connection between the two inductors 31, 32. By closing the switch 43, the second inductor 32 may be electrically bypassed (i.e. converted electrical power provided to power grid 100 does not pass through inductor 32). In this case, no switch corresponding to the further switch 42 needs to be provided, since no magnetic field exists in the separate second inductor 32, so that no short circuit currents are induced. In correspondence to the number of taps described with respect to Fig. 2, a respective number of separate inductors and connections 46 may be provided, thus providing the same inductance switching capabilities. Switching may then again occur in accordance with the above described feedback or feed-forward control (see for example Fig. 5), although no taps may be switched, but distinct inductors 31, 32, ... may be switched. The above explanations are thus equally applicable.

Further, it is certainly possible to combine the switching of taps and the switching of whole distinct inductors, i.e. one or more of the inductors 31, 32, ... may be provided with respective taps. This may allow the fast switching of the inductance value over a wide range.

Again, as mentioned above, switch 43 may be implemented as a power electronic switch (e.g. anti-parallel thyristors), or as an electromechanical switch.

Other ways of switching the inductance value may be certainly conceivable and may be implemented with embodiments of the present invention. For example, the inductance value may be changed by changing the position of an inductor core, changing the relative angular position (and thus the orientation of the magnetic field) of two inductors, in correspondence to a variometer, using a sliding contact on a coil or the like. However, such mechanical solutions may suffer from longer switching times and a reduced number of switching cycles, so that the switching by power electronic switches is preferred.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. An electrical power system of a wind turbine, wherein a power converter (20) of the wind turbine is configured to convert electrical power generated by an electrical generator (11) of the wind turbine and to provide the converted electrical power to a power grid (100), wherein the electrical power system (10) comprises:
- an inductor unit (30) coupled between a grid side converter section (21) of the power converter (20) and the power grid (100), wherein electrical power provided by the power converter (20) towards the power grid (100) causes a voltage drop across the inductor unit (30);
**characterized by** further comprising
- an inductance adjustment unit (40) coupled to the inductor unit (30), wherein the inductance adjustment unit (40) is configured to adjust an inductance value of the inductor unit (30) to thereby adjust the voltage drop across the inductor unit (30).

2. The electrical power system according to claim 1, further comprising a filter (16), in particular a harmonic filter, configured to filter electrical power converted by the power converter (20) and provided towards the power grid (100), wherein the inductor unit (30) forms part of the filter (16).

3. The electrical power system according to claim 1 or 2, wherein the inductance adjustment unit (40) comprises one or more switches (41, 42, 43) coupled to the inductor unit (30) and configured to be switchable to electrically bypass part of the inductor unit (30) to change the inductance value of the inductor unit (30).

4. The electrical power system according to claim 3, wherein the inductance adjustment unit (40) comprises one or more taps (45) coupled to at least one inductor (31) of the inductor unit (30), wherein a switch (41) of the one or more switches is electrically connected to a respective tap (45) such that by closing the switch (41), a part of the inductor (31) is electrically bypassed.

5. The electrical power system according to claim 4, wherein the one or more switches comprise a further switch (42) connected in series with the inductor (31), the further switch (42) being connected to a terminal (36) of the inductor part that is being bypassed by closing the switch (41) associated with said tap (45), the tap (45) being connected at the other end of the inductor part that is being bypassed.

6. The electrical power system according to any of claims 3-5, wherein the inductor unit (30) comprises at least two distinct inductors (31, 32), in particular coils, connected in series between the grid side converter section (21) of the power converter and the power grid (100), wherein a switch (43) of the one or more switches is connected to a point between the two inductors (31) such that by closing the switch (43), one or more of the at least two inductors (31, 32) are electrically bypassed.

7. The electrical power system according to any of claims 3-6, wherein the one or more switches (41, 42, 43) comprise a power electronic switch and/or comprise an electromechanical switch.

8. The electrical power system according to any of the preceding claims, wherein the inductor unit (30) is connected between the grid side converter section (21) and a transformer (15) of the wind turbine.

9. The electrical power system according to any of the preceding claims, further comprising a controller (50) configured to receive a monitoring signal that is indicative of at least one of a voltage on a DC link (23) of the power converter (20), a voltage at a grid side output of the power converter (20), a voltage on a connection from the inductor unit (30) to the power grid (100), or a voltage on the power grid (100), wherein the controller (50) is configured to control the inductance value of the inductor unit (30) by means of the inductance adjustment unit (40) based on the voltage indicated by the monitoring signal.

10. The electrical power system according to claim 9, wherein the controller (50) is configured to compare the voltage indicated by the monitoring signal to a respective voltage threshold, wherein if the voltage exceeds the voltage threshold, the controller (50) controls the inductance adjustment unit (40) so as to reduce the inductance value of the inductor unit (30).

11. The electrical power system according to claim 9 or 10, wherein the controller (50) is configured to obtain the voltage on the DC link (23) of the power converter (20) or at a grid side output of the power converter (20), and is further configured to control the inductance adjustment unit (40) so as to reduce the inductance value of the inductor unit (30) if the voltage on the DC link (23) or the voltage at the grid side output of the power converter (20), respectively, exceeds a respective threshold voltage to thereby reduce the voltage on the DC link (23) of the power converter (20).

12. The electrical power system according to any of claims 9-11, wherein the controller (50) is implemented in a converter controller (25) of the power converter (20) or is implemented in a wind turbine controller of the wind turbine.

13. Wind turbine, comprising:
- a power converter (20) configured to convert electrical power generated by an electrical generator (11) of the wind turbine and to provide the converted electrical power to a power grid (100); and
- an electrical power system (10) according to any of the preceding claims.

14. Method of controlling the operation of an electrical power system (10) of a wind turbine, wherein the wind turbine includes a power converter (20) configured to convert electrical power generated by an electrical generator (11) of the wind turbine and to provide the converted electrical power to a power grid (100), and wherein an inductor unit (30) is coupled between a grid side converter section (21) of the power converter (20) and the power grid (100), wherein electrical power provided by the power converter (20) towards the power grid (100) causes a voltage drop across the inductor unit (30), wherein the method comprises:
- adjusting, by means of an inductance adjustment unit (40) coupled to the inductor unit (30), an inductance value of the inductor unit (30) to thereby adjust the voltage drop across the inductor unit (30).

15. The method according to claim 14, further comprising:
- obtaining at least one of a voltage on a DC link (23) of the power converter (20), a voltage at a grid side output of the power converter (20), a voltage on a connection from the inductor unit (30) to the power grid (100), or a voltage on the power grid (100); and
- controlling the inductance value of the inductor unit (30) by means of the inductance adjustment unit (40) based on the obtained voltage.
